# EUROPÄISCHE PATENTANMELDUNG

(11) **EP 2 213 199 A2**
(43) Veröffentlichungstag der Anmeldung: **04.08.2010**
(21) Anmeldenummer: 10000891.1
(22) Anmeldetag: 28.01.2010
(51) Int. Cl.: A47B 81/06

(54) **Vorrichtung zum Überführen eines Flachbildschirms**

(30) Priorität: 30.01.2009 DE 202009001149 U
(71) Anmelder: Sandrock, Hartmut, 82538 Geretsried (DE)
(72) Erfinder: Sandrock, Hartmut, 82538 Geretsried (DE)
(74) Vertreter: Zeitler - Volpert - Kandlbinder

(57) **Zusammenfassung**

Die Erfindung bezieht sich auf eine Vorrichtung zum Überführen eines Flachbildschirms (2) aus einer etwa horizontalen Ruhestellung in eine etwa vertikale Gebrauchsstellung und umgekehrt und hat einen an einem Möbelstück (5), insbesondere Schrank oder Regal, verschieb- und schwenkbar gehaltenen Befestigungsschlitten (3), an dem der Flachbildschirm (2) montiert ist, wobei der Befestigungsschlitten (3) mittels eines Gestells (6) mit der außen liegenden Oberseite (7) des Möbelstücks (5) verbunden ist und sich Befestigungsschlitten (3) sowie Flachbildschirm (2) in der Ruhestellung oben auf dem Möbelstück (5) zwischen der Oberseite (7) des Möbelstücks (5) und einer Decke (10) befinden.

## Beschreibung

Die Erfindung bezieht sich auf eine Vorrichtung zum Überführen eines Flachbildschirms aus einer etwa horizontalen Ruhestellung in eine etwa vertikale Gebrauchsstellung und umgekehrt nach dem Oberbegriff des Patentanspruchs 1.

Aus der US 5 583 735 ist eine Vorrichtung bekannt, mittels der ein Videomonitor an der Decke von Flugzeugen schwenkbar gehalten ist. Aus den DE 88 02 062 U1 sowie DE 24 52 523 A1 sind Vorrichtungen bekannt, mittels denen Geräte, wie beispielsweise Fernsehgeräte, in einer waagerechten Position aus einem Möbelstück, wie beispielsweise einem Schrank oder Gestell, heraus- und nach dem Gebrauch wieder in dieses hineingeschoben werden können.

Die US 4 184 725 sowie US 2 839 349 offenbaren Küchen-Hängeschränke, an deren Unterseite herauszieh- und schwenkbare Einschübe zum Aufnehmen von Kochbüchern oder Besteck vorgesehen sind.

Die WO 2008/108 654 A2 offenbart eine an einer Decke befestigte Vorrichtung, mittels der ein Bildschirm über eine bogenförmig ausfahrbare Kette heruntergelassen werden kann.

Eine Vorrichtung gemäß dem Oberbegriff des Patentanspruchs 1 ist aus der US 2005/0 225 217 A1 bekannt. Gemäß diesem Dokument ist die Vorrichtung in einem

Standardregal untergebracht und dient zum Aufnehmen einer Computer-Tastatur sowie eines Computer-Monitors. Die aus dem Regal herausgezogene Vorrichtung ist in eine angehobene und eine abgesenkte Stellung abwinkelbar.

Der Erfindung liegt die Aufgabe zugrunde, eine Vorrichtung der eingangs erwähnten Art zu schaffen, mittels der ein Flachbildschirm Platz sparender handhabbar ist.

Diese Aufgabe wird erfindungsgemäß durch eine Vorrichtung mit den Merkmalen des Patentanspruchs 1 gelöst.

### Vorteilhafte Weiterbildungen sind Gegenstand der Unteransprüche.

Da der Befestigungsschlitten mittels eines Gestells mit der außen liegenden Oberseite des Möbelstücks verbunden ist und sich Befestigungsschlitten sowie Flachbildschirm in der Ruhestellung oben auf dem Möbelstück zwischen der Oberseite des Möbelstücks und einer Decke befinden, ist es einerseits möglich, den Platz zwischen beispielsweise der Oberseite eines Schlafzimmerschranks und der Decke sinnvoll zum Ablegen eines Fernsehers zu nutzen. Andererseits ist es möglich, den Flachbildschirm, welcher vorzugsweise aber nicht ausschließlich als Fernseher ausgebildet ist, mit Hilfe des Befestigungsschlittens einfach und unkompliziert aus seiner oben auf dem Schrank befindlichen Ruhestellung in eine etwa vertikale Gebrauchsstellung, in der der Flachbildschirm bestimmungsgemäß benutzt werden kann, zu überführen. Der Flachbildschirm ist also in seiner Ruhestellung Platz sparend und geschützt auf dem Möbelstück nämlich zwischen dem Möbelstück und der Decke angeordnet; er befindet sich nur in der Gebrauchsstellung in einer vertikalen Position vor dem Möbelstück. Der Flachbildschirm beeinträchtigt somit, wenn er nicht benötigt wird, auch nicht die Bewegungsfreiheit in relativ engen Zimmern, da er mittels der erfindungsgemäßen Vorrichtung schnell aus seiner etwa vertikalen Gebrauchsstellung in seine etwa horizontale Ruhestellung an einen Ort überführbar ist, der abgelegen und anderweitig kaum nutzbar ist. Die erfindungsgemäße Vorrichtung befindet sich auch nicht wie im letztgenannten Stand der Technik innerhalb des Möbelstücks sondern auf dem Möbelstück an einem Ort, welcher häufig ein nicht nutzbarer Totraum ist. Mit Hilfe der erfindungsgemäßen Vorrichtung kann dieser

Raum sinnvoll genutzt werden.

Vorteilhafterweise weist das Gestell ein Profil mit vorzugsweise zwei C- oder U-förmigen Profilstäben auf, in denen der Befestigungsschlitten beweglich geführt ist, wobei der Befestigungsschlitten vorzugsweise an seinem hinteren Ende Rollen aufweist, mit denen der Befestigungsschlitten in dem Profil, vorzugsweise in den beiden Profilstäben, verschieb- und schwenkbar geführt ist. Ein solches Profil ist kostengünstig herstellbar und kann ebenfalls Platz sparend in geringer Höhe ausgebildet sein, so dass auch Nischen geringer Höhe zum Aufnehmen der erfindungsgemäßen Vorrichtung verwendbar sein können. Mit Hilfe der Rollen kann der Befestigungsschlitten mitsamt dem Flachbildschirm leicht, schnell und mit geringem Kraftaufwand aus der horizontalen Ruhestellung in die vertikale Gebrauchsstellung und umgekehrt überführt werden.

Gemäß einer anderen Weiterbildung der Erfindung steht die Vorderkante des Profils über die Vorderkante des Möbelstücks vor oder ist die Vorderkante des Profils in eine über die Vorderkante des Möbelstücks vorgezogene Stellung überführbar. Gemäß einer ersten, relativ einfachen und kostengünstig herstellbaren Ausführungsform kann also die Vorderkante des Profils dauerhaft über die Vorderkante des Möbelstücks vorstehen. Gemäß einer zweiten, komfortabler ausgebildeten Ausführungsform ist das gesamte Profil und damit auch die Vorderkante des Profils hin und her schiebbar ausgebildet, so dass die Vorderkante des Profils und damit der gesamten Vorrichtung in der Ruhestellung der Vorrichtung etwa bündig mit der Vorderkante des Möbelstücks abschließen kann und lediglich in der Gebrauchsstellung der Vorrichtung über die Vorderkante des Möbelstücks vorsteht.

Vorteilhafterweise weist das Gestell eine Rollenschubführung auf, die einerseits an dem Profil, vorzugsweise den beiden Profilstäben, andererseits über ein Untergestell an der Oberseite des Möbelstücks befestigt ist, so dass das Profil aus einer zurückgeschobenen Stellung in die über die Vorderkante des Möbelstücks vorgezogene Stellung und umgekehrt überführbar ist. Eine solche Rollenschubführung trägt mit dazu bei, dass die erfindungsgemäße Vorrichtung äußerst Platz sparend und ästhetisch ansprechend ausgestaltet ist. Lediglich in der etwa vertikalen Gebrauchsstellung befindet sich das Gestell und damit das Profil in der über die Vorderkante des Möbelstücks vorgezogenen Stellung. In der Ruhestellung kann sich die erfindungsgemäße Vorrichtung mitsamt dem Flachbildschirm vollständig innerhalb der Kontur des Möbelstücks befinden. In der letztgenannten Stellung steht also kein Element der erfindungsgemäßen Vorrichtung über die Vorderseite des Möbelstücks vor. Dadurch ist ein unbeabsichtigtes Anstoßen an die erfindungsgemäße Vorrichtung bzw. den damit verbundenen Flachbildschirm nahezu ausgeschlossen. Die Gefahr von Verletzungen beispielsweise von Teilen des Kopfes ist bei einer solchen Ausführungsform der erfindungsgemäßen Vorrichtung weitestgehend verhindert.

Gemäß einer anderen Weiterbildung der Erfindung hat der Befestigungsschlitten an seinem vorderen Ende einen Griff, mittels dem der Befestigungsschlitten in dem Profil, vorzugsweise in den beiden Profilstäben, verschiebbar und, sofern sich die Rollen nahe der Vorderkante des über die Vorderkante des Möbelstücks vorstehenden oder vorgezogenen Profils befinden, aus der etwa horizontalen Ruhestellung in die etwa vertikale Gebrauchsstellung und umgekehrt schwenkbar ist. Das Profil befindet sich also lediglich in der Gebrauchsstellung der erfindungsgemäßen Vorrichtung in seiner über die Vorderkante des Möbelstücks vorstehenden oder vorgezogenen Stellung. Die erfindungsgemäße Vorrichtung ist also mit Hilfe des Griffes mit geringem Zeitaufwand handhabbar, da der Befestigungsschlitten mit dem Flachbildschirm lediglich vorzuziehen und aus der etwa horizontalen Ruhestellung in die etwa vertikale Gebrauchsstellung herunter zu schwenken ist.

Gemäß einer anderen Weiterbildung der Erfindung schließt der frei in seiner Gebrauchsstellung hängende Befestigungsschlitten zur Vertikalen einen spitzen Winkel zwischen vorzugsweise 10 und 30°, bevorzugt von 18°, so ein, dass das vordere, in der Gebrauchsstellung untere Ende des Befestigungsschlittens an oder nahe an der Vorderseite des Möbelstücks und das hintere, in der Gebrauchsstellung obere Ende des Befestigungsschlittens mit größerem Abstand als das vordere Ende vor der Vorderseite des Möbelstücks angeordnet ist. Dadurch sind sowohl der Befestigungsschlitten als auch der damit verbundene Flachbildschirm in der Gebrauchsstellung nach unten, d.h. zum Boden hin, geneigt vorgesehen, so dass der Flachbildschirm dem Blickfeld der in den Flachbildschirm schauenden Person zugewandt ist. Insofern kann auch eine sich unterhalb des Flachbildschirms befindende Person leicht und bequem in den Bildschirm schauen.

Vorteilhafterweise weist das Profil, vorzugsweise jeder der beiden Profilstäbe, wenigstens einen Anschlag zum Begrenzen des Verschiebeweges des Befestigungsschlittens relativ zum Profil und/oder zum Begrenzen des Verschiebeweges des Profils relativ zum Möbelstück auf. Mittels einer Betätigung des Befestigungsschlittens kann daher auch das Profil, insbesondere die beiden Profilstäbe, nahezu automatisch in seine zurückgeschobene Stellung oder in seine über die Vorderkante des Möbelstücks vorgezogene Stellung und umgekehrt überführt werden. Die an dem Befestigungsschlitten angreifende Kraft des Benutzers ist damit auf einfache Weise auf das Gestell, insbesondere das Profil, überleitbar. Insofern ist es für die die erfindungsgemäße Vorrichtung handhabende Person nicht erforderlich, mit der einen Hand den Griff des Befestigungsschlittens zu halten und mit der anderen Hand an dem Profil anzugreifen. Vielmehr kann die gesamte Vorrichtung mittels des Griffes und damit mit lediglich einer Hand betätigt und gehandhabt werden.

Vorteilhafterweise weist das Untergestell Rollen zum Abstützen des Profils, vorzugsweise der beiden Profilstäbe, und des Befestigungsschlittens auf, wobei vorzugsweise jede Rolle gleichzeitig das Profil, besonders bevorzugt einen der beiden Profilstäbe, und den Befestigungsschlitten abstützt. Somit lässt sich die erfindungsgemäße Vorrichtung mit einem geringen Kraftaufwand handhaben. Jede Rolle kann im Sinne einer Doppelwirkung sowohl zum Abstützen des Profils als auch des Befestigungsschlittens dienen.

Ausführungsformen des Erfindungsgegenstandes werden nachfolgend anhand der Zeichnung näher erläutert, wobei alle beschriebenen und/oder bildlich dargestellten Merkmale für sich oder in beliebiger Kombination den Gegenstand der vorliegenden Erfindung unabhängig von ihrer Zusammenfassung in den Ansprüchen oder deren Rückbeziehung bilden. Es zeigen:
- Fig. 1: eine schematische Seitenansicht einer Vorrichtung zum Überführen ei- nes Flachbildschirms aus einer etwa horizontalen Ruhestellung in eine etwa vertikale Gebrauchsstellung und umgekehrt in der etwa vertikalen Gebrauchsstellung;
- Fig. 2: eine schematische perspektivische Ansicht der Vorrichtung in der in Fig. 1 gezeigten Gebrauchsstellung jedoch ohne Flachbildschirm;
- Fig. 3: eine schematische, teilweise geschnittene Seitenansicht eines Teils der Vorrichtung gemäß Fig. 1;
- Fig. 4: eine schematische Seitenansicht der Vorrichtung in der etwa horizonta- len Ruhestellung;
- Fig. 5: eine schematische perspektivische Ansicht der Vorrichtung gemäß Fig. 4 jedoch ohne Flachbildschirm; und
- Fig. 6: einen schematischen Teilschnitt entlang der Linie VI - VI in Fig. 4.

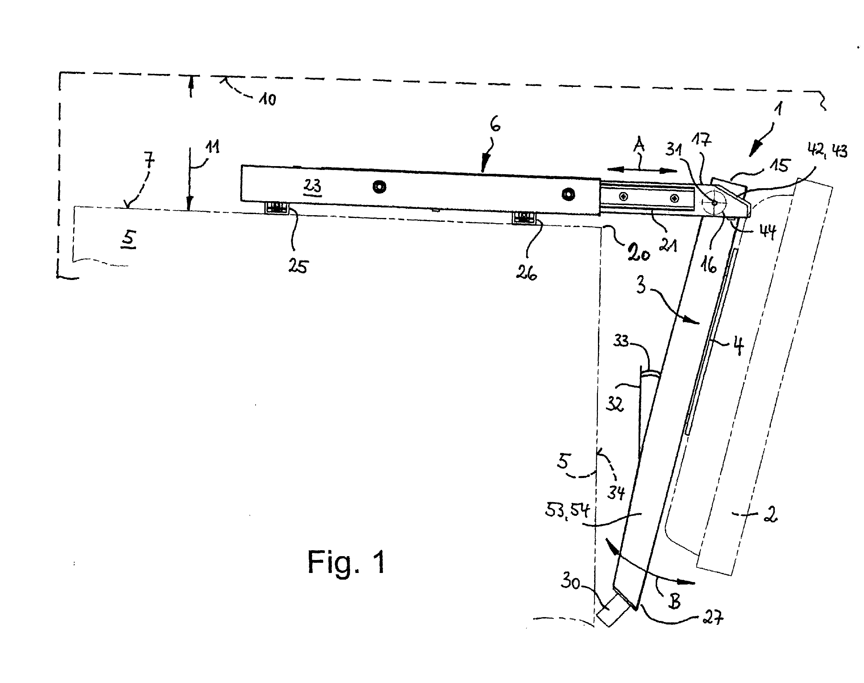

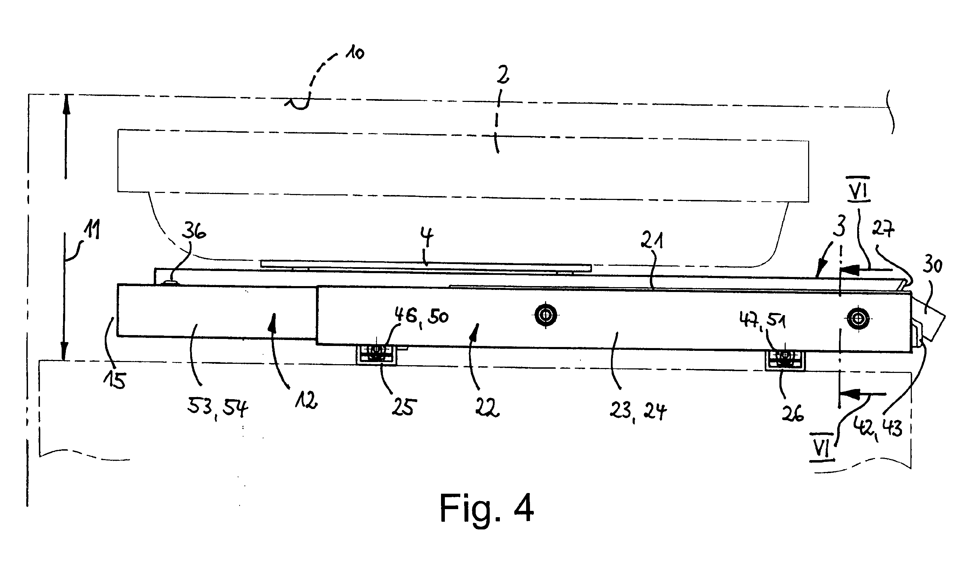

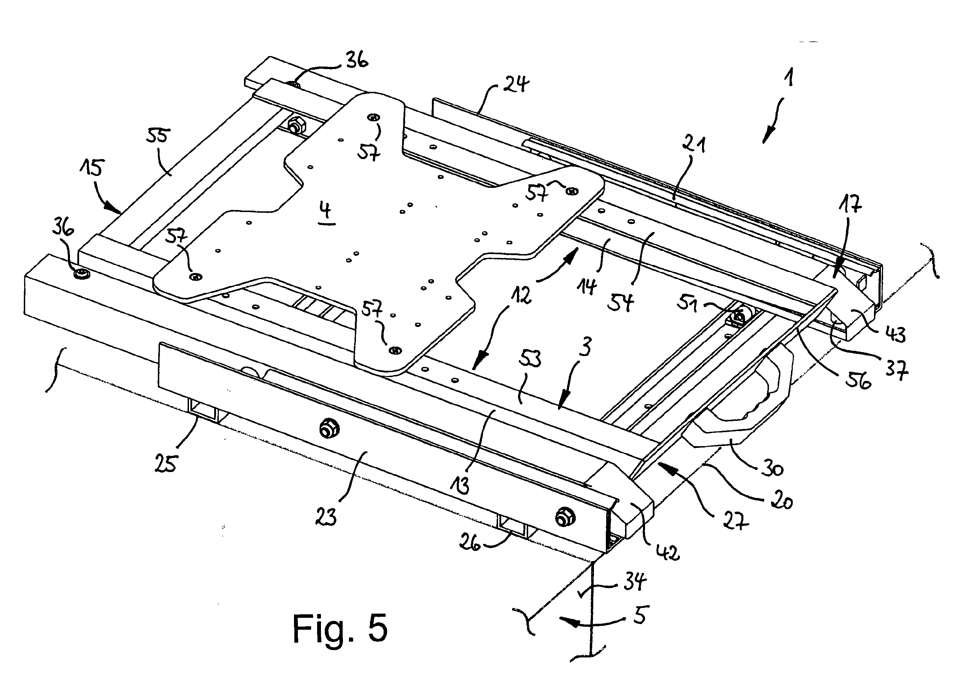

In Fig. 1 ist schematisch eine Seitenansicht einer Vorrichtung 1 zum Überführen eines Flachbildschirms 2 aus einer etwa horizontalen Ruhestellung in eine etwa vertikale Gebrauchsstellung und umgekehrt dargestellt, wobei sich die Vorrichtung in Fig. 1 in der etwa vertikalen Gebrauchsstellung befindet. Die Ruhestellung der Vorrichtung 1 ist schematisch in den Fig. 4 und 5 dargestellt.

Die Vorrichtung 1 hat einen Befestigungsschlitten 3, an dem der Flachbildschirm 2 mittels einer Halteplatte 4 montiert ist. Der Befestigungsschlitten 3 ist außen an einem Möbelstück 5, insbesondere einem Schrank oder Regal, verschiebbar (siehe Pfeil A) und schwenkbar (siehe Pfeil B) gehalten.

Der Befestigungsschlitten 3 ist mittels eines Gestells 6 mit der außen liegenden Oberseite 7 des Möbelstücks 5 verbunden. In der Ruhestellung befinden sich Befestigungsschlitten 3 sowie Flachbildschirm 2 oben auf dem Möbelstück 5 zwischen der Oberseite 7 des Möbelstücks 5 und einer Decke 10, wie dies schematisch in den Fig. 4 und 5 angedeutet ist. Es ist klar, dass der in den Fig. 1 und 4 gezeigte Abstand 11 zwischen der Oberseite 7 des Möbelstücks 5 und der Decke 10 so bemessen ist, dass Vorrichtung und Flachbildschirm in die in den Fig. 4 und 5 gezeigte Ruhestellung überführbar sind.

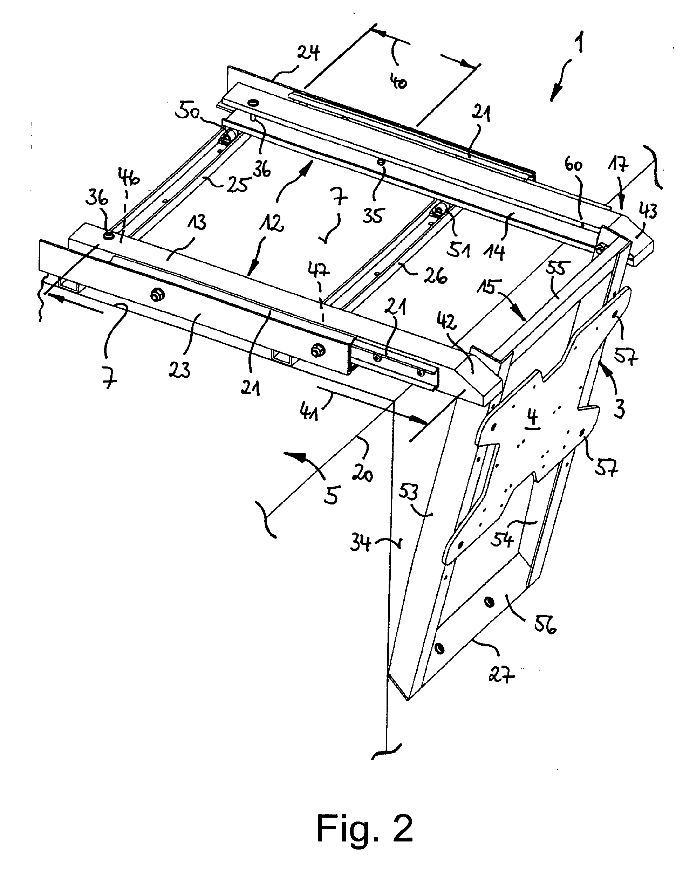

Das Gestell 6 weist ein Profil 12 auf, welches, wie genauer in den Fig. 2, 5 und 6 gezeigt, gemäß den in den Figuren gezeigten Ausführungsformen zwei C- oder U-förmige Profilstäbe 13, 14 hat. In den Profilstäben 13, 14 ist der Befestigungsschlitten 3 beweglich geführt.

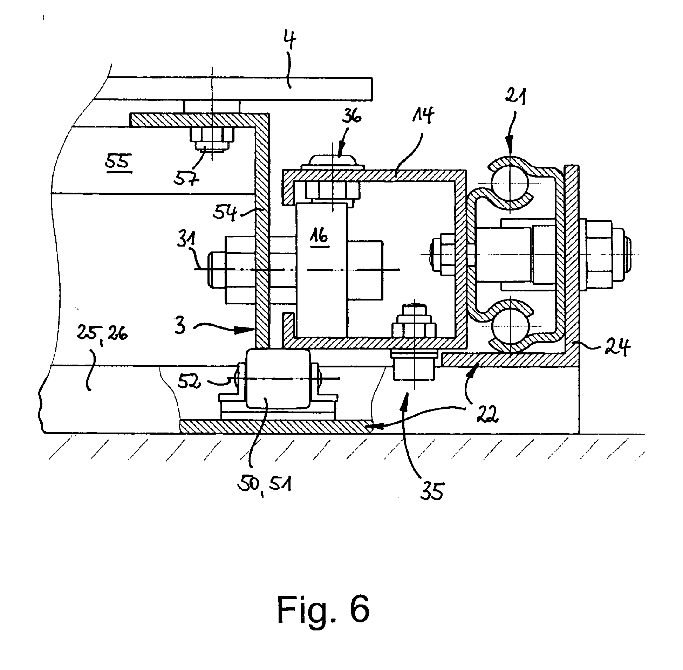

Gemäß den Fig. 1, 3 und 6 hat der Befestigungsschlitten 3 an seinem hinteren Ende 15 Rollen 16. Mit Hilfe dieser Rollen 16 ist der Befestigungsschlitten 3 in dem Profil 12, nämlich in den beiden Profilstäben 13, 14 verschieb- und verschwenkbar geführt. Wie in Fig. 6 angedeutet, ist jedem Profilstab 13, 14 eine Rolle 16 zugeordnet. Jede Rolle 16 läuft in dem Profil, also in dem betreffenden Profilstab 13 bzw. 14.

Gemäß einer einfachen, nicht näher gezeigten Ausführungsform der Erfindung steht die Vorderkante 17 des Profils 12, wie in den Fig. 1 bis 3 angedeutet, über die Vorderkante 20 des Möbelstücks 5 dauerhaft vor. Gemäß einer bevorzugten, in den Fig. 1 bis 6 gezeigten Ausführungsform der Erfindung ist das Profil in eine über die Vorderkante 20 des Möbelstücks 5 vorgezogene Stellung überführbar.

Wie näher in den Fig. 1 bis 3 sowie 6 gezeigt, hat das Gestell 6 eine Rollenschubführung 21. Diese Rollenschubführung 21 ist einerseits an dem Profil 12, nämlich an jedem der beiden Profilstäbe 13, 14, andererseits über ein Untergestell 22 an der Oberseite 7 des Möbelstücks 5 derart befestigt, dass das Profil 12 aus einer zurückgeschobenen Stellung (siehe Fig. 4 und 5) in die über die Vorderkante 20 des Möbelstücks 5 vorgezogene Stellung (siehe Fig. 1 bis 3) und umgekehrt überführbar ist (siehe Doppelpfeil A in Fig. 1). Das Untergestell 22 hat beispielsweise zwei parallele und voneinander beabstandete L-förmige Stäbe 23, 24, welche an ihrer Unterseite mittels zweier U-förmiger Querträger 25, 26 fest miteinander verbunden sind. Die Querträger 25, 26 des Untergestells 22 sind vorzugsweise lösbar mit der Oberseite 7 des Möbelstücks 5 verbunden.

Der Befestigungsschlitten 3 hat an seinem vorderen Ende 27 (siehe Fig. 1, 4 und 5) einen Griff 30. Mit diesem Griff 30 ist der Befestigungsschlitten 3 in dem Profil 12, nämlich in den beiden Profilstäben 13, 14, verschiebbar und, sofern sich die Rollen 16 des Befestigungsschlittens 3 nahe der Vorderkante 17 des über die Vorderkante 20 des Möbelstücks 5 vorstehenden oder vorgezogenen Profils 12 befinden, aus der etwa horizontalen Ruhestellung in die etwa vertikale Gebrauchsstellung und umgekehrt schwenkbar. Dabei dient die Drehachse 31 der Rollen 16 als Schwenkachse für den gesamten Befestigungsschlitten 3.

Wie in den Fig. 1 bis 3 gezeigt, schließt der frei in seiner Gebrauchsstellung hängende Befestigungsschlitten zur Vertikalen 32 einen spitzen Winkel 33 zwischen vorzugsweise 10° und 30°, bevorzugt von 18°, so ein, dass das vordere, in der Gebrauchsstellung untere Ende 27 des Befestigungsschlittens 3 an oder nahe an der Vorderseite 34 des Möbelstücks 5 und das hintere, in der Gebrauchsstellung obere Ende 15 des Befestigungsschlittens 3 mit größerem Abstand als das vordere Ende 27 vor der Vorderseite 34 des Möbelstücks 5 angeordnet ist. Üblicherweise liegt die Vorrichtung 1 mit ihrer Befestigungsschiene bzw. mit deren Griff 30 an der Vorderseite 34 des Möbelstücks an, wenn sich die Vorrichtung in ihrer etwa vertikalen Gebrauchsstellung befindet und der Flachbildschirm 2 mittels der Halteplatte 4 an dem Befestigungsschlitten 3 montiert ist.

Das Profil 12, nämlich vorzugsweise jeder der beiden Profilstäbe 13, 14, hat wenigstens einen Anschlag 34 bis 37. Gemäß dem in den Figuren dargestellten Ausführungsbeispiel hat das Profil 12 einen ersten Anschlag 35 zum Begrenzen des Verschiebeweges 40 des Profils 12 relativ zum Möbelstück 5. Der erste Anschlag 35 ist beispielsweise eine durch eine Mutter gesicherte Schraube, welche durch eine im jeweiligen Profilstab 13, 14 befindliche und nicht näher gezeigte Bohrung hindurch gesteckt ist. In der etwa horizontalen Ruhestellung der Vorrichtung stößt der Anschlag 35, wie in Fig. 6 angedeutet, beispielsweise an dem Querträger 25 an, so dass das Profil 12 nicht weiter zurückgeschoben werden kann. Die Länge des Verschiebeweges 40 des Profils nach vorne, also in die vorgezogene Stellung hin, wird durch die maximale Ausziehlänge der Rollenschubführung 21 begrenzt.

Ferner hat das Profil 12 einen zweiten sowie einen dritten Anschlag 36, 37 zum Begrenzen des Verschiebeweges 41 des Befestigungsschlittens 3 relativ zum Profil 12 und damit innerhalb der Profilstäbe 13, 14. Der zweite Anschlag 36 befindet sich am hinteren Ende des Profils 12, wobei jedem Profilstab ein zweiter Anschlag 36 zugeordnet ist. Damit können die Rollen 16 nicht hinten aus den Profilstäben herausgleiten. Dritte Anschläge 37 sind nahe der Vorderkante 17 des Profils vorgesehen, wobei wiederum jedem Profilstab 13, 14 ein dritter Anschlag 37 zugeordnet ist. Dadurch ist der Verschiebeweg 41 des Befestigungsschlittens 3 relativ zum Profil nach vorne hin begrenzt.

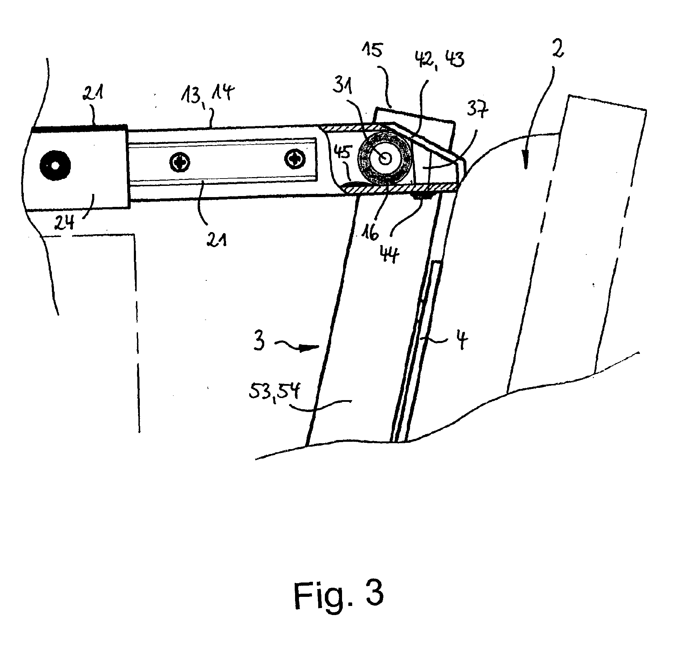

Gemäß der in Fig. 3 gezeigten bevorzugten Ausführungsform der Erfindung hat jeder Profilstab 13, 14 eine abgeschrägte Abdeckkappe 42, 43, welche vorzugsweise einstückig mit dem dritten Anschlag 37 verbunden ist. Der dritte Anschlag 37 hat die Funktion eines vorderen Anschlags für den Befestigungsschlitten. Jeder dritte Anschlag 37 hat ein nicht näher gezeigtes Innengewinde, in das eine Schraube 44 einschraubbar ist, die sich in der eingeschraubten Stellung durch eine nicht näher gezeigte Bohrung im jeweiligen Profilstab hindurch erstreckt. Im Sinne einer Doppelwirkung hat also der Anschlag einerseits die Funktion, den Verschiebeweg 41 des Befestigungsschlittens 3 nach vorne, nämlich zur Vorderkante 17 des Profils hin zu begrenzen; andererseits hat der dritte Anschlag 37 auch die Funktion, die jeweilige Abdeckkappe 42, 43 mit Hilfe der Schraube 44 mit dem jeweiligen Profilstab 13, 14 zu verbinden.

Gemäß Fig. 3 befindet sich auf der Rollfläche jedes Profilstabes 13, 14, auf der die jeweilige Rolle 16 des Befestigungsschlittens 3 abrollt, eine abgeflachte Verdickung 45. Diese ist vom dritten Anschlag 37 so beabstandet, dass die Rolle 16 des Befestigungsschlittens, wie in Fig. 3 gezeigt, zwischen der abgeflachten Verdickung 45 und dem Anschlag 37 gewissermaßen nach vorne durch den Anschlag und nach hinten durch die Verdickung abgestützt gehalten ist. Dadurch besteht beim Handhaben der erfindungsgemäßen Vorrichtung weniger leicht die Gefahr, dass der Befestigungsschlitten in seiner etwa vertikalen Gebrauchsstellung über seine Rollen 16 innerhalb der Profilstäbe 13, 14 zurück schwingt.

Gemäß einer bevorzugten Ausführungsform der Erfindung weist das Untergestell 22 Rollen 46, 47; 50, 51 zum Abstützen des Profils 12, vorzugsweise der beiden Profilstäbe 13, 14, und des Befestigungsschlittens 3 auf. Gemäß einer besonders bevorzugten Ausführungsform der Erfindung, welche genauer in Fig. 6 gezeigt ist, stützt dabei jede Rolle 46, 47; 50, 51 gleichzeitig sowohl das Profil 12, nämlich vorzugsweise jeweils einen der beiden Profilstäbe 13, 14, als auch den Befestigungsschlitten 3 ab. Wie in Fig. 6 gezeigt, hat dabei jede Rolle 50, 51 eine horizontale Längs- bzw. Rotationsachse 52. Die Rollen 46, 47; 50, 51 befinden sich gemäß den Fig. 2 und 6 in den Querträgern 25, 26 des Untergestells 22.

Gemäß den Fig. 2, 5 und 6 weist der Befestigungsschlitten 3 zwei voneinander beabstandete, L-förmige Profilstäbe 53, 54 auf, welche mittels Querstreben 55, 56 miteinander verbunden sind. Die Querstrebe 55 ist im Bereich des hinteren Endes 15 des Befestigungsschlittens angeordnet, die Querstrebe 56 befindet sich am vorderen Ende 27 des Befestigungsschlittens 3. Der Griff 30 ist mit der vorderen Querstrebe 56 vorzugsweise lösbar verbunden. Die Halteplatte 4 ist über Schraubverbindungen 57 mit beiden L-förmigen Profilstäben 53, 54 verbunden. Ferner befindet sich nahe dem hinteren Ende 15 des Befestigungsschlittens, wie zuvor bereits erwähnt, an jedem hinteren Ende der L-förmigen Profilstäbe 53, 54 jeweils eine außen am jeweiligen Profilstab angeordnete Rolle 16 derart, dass letztere in den Profilstäben 13, 14 des Profils 12 hin und her rollbar sind.

Die Drehachsen 31 der Rollen 16 sind an jedem L-förmigen Profilstab 53, 54 in Fig. 6 nach unten, d.h. zum Untergestell 22 hin versetzt. Dies unterstützt die zur Vertikalen geneigte Gebrauchsstellung der Vorrichtung, welche sich auch daraus ergibt, dass in der Gebrauchsstellung die Halteplatte 4 sich außen auf den L-förmigen Profilstäben und auf der Halteplatte 4 der Flachbildschirm 2 befindet, welcher in den Fig. 2 und 5 der besseren Übersicht halber weggelassen ist. In gewissen Grenzen kann der Winkel 33, welcher auch Neigungswinkel genannt werden kann, auch dadurch variiert werden, dass die Profilstäbe 13, 14 des Profils 12 über eine größere Länge oder über eine kleinere Länge aus dem Untergestell 22 und über das Möbelstück vorstehend herausgezogen werden. Ein geringeres Herausziehen der Profilstäbe kann den Winkel 33 verringern, ein stärkeres Herausziehen vergrößern.

Gemäß einer weiteren Ausführungsform der Erfindung hat jeder Profilstab 13, 14 an seiner Innenseite wenigstens einen Kunststoffpfropfen 60 zur seitlichen Führung des Befestigungsschlittens 3 innerhalb der Profilstäbe 13, 14 (siehe Fig. 2).

Nachfolgend wird das Montieren der erfindungsgemäßen Vorrichtung näher erläutert.

Zunächst wird das Gestell 6 allerdings ohne Befestigungsschlitten 3 fest auf der Oberseite 7 des Möbelstücks 5 montiert. In einem nächsten Schritt wird die Halteplatte 4 fest auf dem Befestigungsschlitten 3 montiert. Nunmehr wird der Flachbildschirm 2 an der Halteplatte 4 und damit an dem Befestigungsschlitten 3 montiert.

Die Abdeckkappen 42, 43 sind oder werden von den Profilstäben 13, 14 entfernt und die Einheit bestehend aus Befestigungsschlitten, Halteplatte und Flachbildschirm wird mittels der Rollen 16 in Profilstäbe 13, 14 so weit eingeschoben, bis sich die gesamte Vorrichtung in der beispielsweise in Fig. 4 gezeigten etwa horizontalen Ruhestellung befindet. Nunmehr werden die Abdeckkappen 42, 43 fest mit den Profilstäben 13, 14 verbunden. Damit ist die Montage der erfindungsgemäßen Vorrichtung abgeschlossen.

Nachfolgend wird die Handhabung der erfindungsgemäßen Vorrichtung näher erläutert.

Die Vorrichtung befindet sich zunächst in der beispielhaft in Fig. 4 gezeigten etwa horizontalen Ruhestellung. Zum Überführen der Vorrichtung in die etwa vertikale, schematisch in Fig. 1 gezeigte Gebrauchsstellung wird der Befestigungsschlitten und damit die Halteplatte und der Flachbildschirm mit Hilfe des Griffes 30 in Richtung des zur Vorderkante 20 des Möbelstücks gerichteten Pfeils A und damit in horizontaler Richtung herausgezogen. Dabei bewegen sich die Rollen 16 innerhalb der Profilstäbe 13, 14 so weit nach vorne, bis die Rollen 16 an den dritten Anschlägen 37 anstoßen. Eine weitere horizontale Vorwärtsbewegung bewirkt dann auch ein Überführen des Profils in eine über die Vorderkante 20 des Möbelstücks 5 vorgezogene Stellung, wie diese in den Fig. 1 bis 3 gezeigt ist. Sodann wird die Einheit aus Befestigungsschlitten, Halteplatte und Flachbildschirm in Richtung des zur Vorderseite 34 des Möbelstücks hin gerichteten Pfeils B im Uhrzeigersinn nach unten geschwenkt.

Ein Überführen der erfindungsgemäßen Vorrichtung aus der Gebrauchsstellung in die Ruhestellung erfolgt in umgekehrter Reihenfolge. Dabei wird die Einheit aus Befestigungsschlitten, Halteplatte und Flachbildschirm zunächst nach oben in eine etwa horizontale Stellung in Fig. 1 im Gegenuhrzeigersinn verschwenkt. Dann wird die Einheit aus Befestigungsschlitten, Halteplatte und Flachbildschirm innerhalb der Profilstäbe nach hinten geschoben, bis die Rollen 16 an den zweiten Anschlägen 36 anstoßen. Ein weiteres Hineinschieben bewirkt auch ein Zurückschieben der Profilstäbe 13, 14 relativ zum Grundgestell, bis schließlich die ersten Anschläge 35 der Profilstäbe am Untergestell anstoßen. Nunmehr befindet sich die erfindungsgemäße Vorrichtung wieder in ihrer in Fig. 4 gezeigten, verstauten Ruhestellung oben auf dem Möbelstück in einer Nische zwischen der Oberseite 7 des Möbelstücks und der Decke 10.

Damit ist eine Vorrichtung geschaffen, mittels der ein Flachbildschirm äußerst Platz sparend handhabbar ist.

## Patentansprüche

1. Vorrichtung zum Überführen eines Flachbildschirms (2) aus einer etwa horizontalen Ruhestellung in eine etwa vertikale Gebrauchsstellung und umgekehrt,
mit einem an einem Möbelstück (5), insbesondere Schrank oder Regal, verschieb- und schwenkbar gehaltenen Befestigungsschlitten (3), an dem der Flachbildschirm (2) montiert ist,
**dadurch gekennzeichnet, dass**
der Befestigungsschlitten (3) mittels eines Gestells (6) mit der außen liegenden Oberseite (7) des Möbelstücks (5) verbunden ist und sich Befestigungsschlitten (3) sowie Flachbildschirm (2) in der Ruhestellung oben auf dem Möbelstück (5) zwischen der Oberseite (7) des Möbelstücks (5) und einer Decke (10) befinden.

2. Vorrichtung nach Anspruch 1, **dadurch gekennzeichnet, dass** das Gestell (6) ein Profil (12) mit vorzugsweise zwei C- oder U-förmigen Profilstäben (13, 14) aufweist, in denen der Befestigungsschlitten (3) beweglich geführt ist.

3. Vorrichtung nach Anspruch 2, **dadurch gekennzeichnet, dass** der Befestigungsschlitten (3) an seinem hinteren Ende (15) Rollen (16) aufweist, mittels denen der Befestigungsschlitten (3) in dem Profil (12), vorzugsweise in den beiden Profilstäben (13, 14), verschieb- und schwenkbar geführt ist.

4. Vorrichtung nach Anspruch 2 oder 3, **dadurch gekennzeichnet, dass** die Vorderkante (17) des Profils (12) über die Vorderkante (20) des Möbelstücks (5) vorsteht oder in eine über die Vorderkante (20) des Möbelstücks (5) vorgezogene Stellung überführbar ist.

5. Vorrichtung nach Anspruch 4, **dadurch gekennzeichnet, dass** das Gestell (6) eine Rollenschubführung (21) aufweist, die einerseits an dem Profil (12), vorzugsweise den beiden Profilstäben (13, 14), andererseits über ein Untergestell (22) an der Oberseite (7) des Möbelstücks (5) befestigt ist, so dass das Profil (12) aus einer zurückgeschobenen Stellung in die über die Vorderkante (20) des Möbelstücks (5) vorgezogene Stellung und umgekehrt überführbar ist.

6. Vorrichtung nach einem der Ansprüche 3 bis 5, **dadurch gekennzeichnet, dass** der Befestigungsschlitten (3) an seinem vorderen Ende (27) einen Griff (30) hat, mittels dem der Befestigungsschlitten (3) in dem Profil (12), vorzugsweise in den beiden Profilstäben (13, 14), verschiebbar und sofern sich die Rollen (16) nahe der Vorderkante (17) des über die Vorderkante (20) des Möbelstücks (5) vorstehenden oder vorgezogenen Profils (12) befinden, aus der etwa horizontalen Ruhestellung in die etwa vertikale Gebrauchsstellung und umgekehrt schwenkbar ist.

7. Vorrichtung nach einem der vorhergehenden Ansprüche, **dadurch gekennzeichnet, dass** der frei in seiner Gebrauchsstellung hängende Befestigungsschlitten (3) zur Vertikalen (32) einen spitzen Winkel (33) zwischen vorzugsweise 10° und 30°, bevorzugt von 18°, so einschließt, dass das vordere, in der Gebrauchsstellung untere Ende (27) des Befestigungsschlittens (3) an oder nahe an der Vorderseite (34) des Möbelstücks (5) und das hintere, in der Gebrauchsstellung obere Ende (15) des Befestigungsschlittens (3) mit größerem Abstand als das vordere Ende (27) vor der Vorderseite (34) des Möbelstücks (5) angeordnet ist.

8. Vorrichtung nach einem der Ansprüche 2 bis 7, **dadurch gekennzeichnet, dass** das Profil (12), vorzugsweise jeder der beiden Profilstäbe (13, 14), wenigstens einen Anschlag (35 bis 37) zum Begrenzen des Verschiebeweges (41) des Befestigungsschlittens (3) relativ zum Profil (12) und/oder zum Begrenzen des Verschiebeweges (40) des Profils (12) relativ zum Möbelstück (5) aufweist.

9. Vorrichtung nach einem der Ansprüche 5 bis 8, **dadurch gekennzeichnet, dass** das Untergestell (22) Rollen (46, 47; 50, 51) zum Abstützen des Profils (12), vorzugsweise der beiden Profilstäbe (13, 14), und des Befestigungsschlittens (3) aufweist.

10. Vorrichtung nach Anspruch 9, **dadurch gekennzeichnet, dass** jede Rolle (46, 47; 50, 51) gleichzeitig das Profil (12), vorzugsweise einen der beiden Profilstäbe (13, 14), und den Befestigungsschlitten (3) abstützt.
